# EUROPEAN PATENT SPECIFICATION

(11) **EP 3 580 842 B1**
(45) Date of publication and mention of the grant of the patent: **01.05.2024**
(21) Application number: 18774981.7
(22) Date of filing: 28.03.2018
(51) Int. Cl.: H02M 3/335, H05B 45/3725, H05B 45/382

(54) **POWER SUPPLY APPARATUS AND POWER SUPPLY METHOD**
STROMVERSORGUNGSVORRICHTUNG UND STROMVERSORGUNGSVERFAHREN
APPAREIL ET PROCÉDÉ D'ALIMENTATION ÉLECTRIQUE

(30) Priority: 29.03.2017 CN 201710195436
(43) Date of publication of application: 18.12.2019
(73) Proprietor: Tridonic GmbH & Co. KG, 6851 Dornbirn (AT)
(72) Inventor: MAO, Qiuxiang, Shenzhen Guangdong 518000 (CN); CHEN, Zhiwen, Shenzhen Guangdong 518000 (CN); KE, Qitao, Shenzhen Guangdong 518000 (CN); ZHONG, Guoji, Shenzhen Guangdong 518000 (CN)
(74) Representative: Rupp, Christian
(86) International application number: PCT/CN2018/080917
(87) International publication number: WO 2018/177328

(56) References cited:
- CN-A- 103 107 696
- CN-A- 105 186 856
- CN-Y- 2 788 445
- JP-A- 2008 245 419
- US-A1- 2010 156 308
- US-A1- 2010 182 347
- US-A1- 2011 248 647
- US-A1- 2013 236 203
- US-A1- 2015 285 872

## Description

### Technical Field

The present invention relates to the field of power source technology, and more specifically, to a power supply apparatus and a method of operating the same that can provide a plurality of current output specifications.

### Background Art

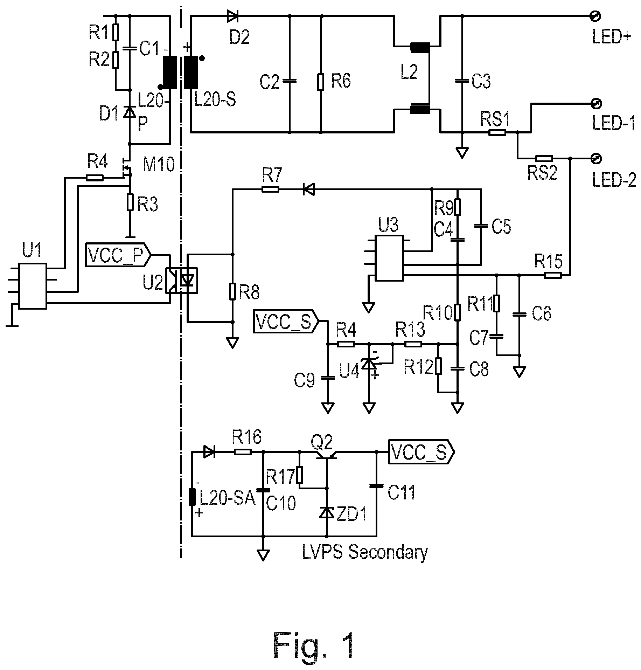

Commercially available power supply apparatuses generally have disadvantages of a complex circuit design and high costs. For example, Fig. 1 in the specification of the present invention discloses a common commercially available power supply apparatus that can provide two current output specifications. Referring to Fig. 1 in the specification, when a positive input end of a load is connected to a positive input end of a power source, and a negative input end of the load is connected to a first negative output end of the power source, the power supply apparatus can output a first preset current to the load. When the positive input end of the load is connected to the positive input end of the power source, and the negative input end of the load is connected to a second negative output end of the power source, the power supply apparatus can output a second preset current to the load. However, to achieve a specific function of the power supply apparatus, an additional secondary side power supply circuit needs to be provided, and further effort is needed to resolve a timing problem of a direct current conversion circuit and a secondary side power supply current as well as technical difficulties such as an excessive-pulse output current.

In addition, such a power supply apparatus has a complex circuit design and high costs, and is not applicable to a primary side feedback topology. The document US 2010/0156308 A1 shows an adjustable output ballast for powering both fluorescent lamps and LED lamps. The circuit therein comprises terminals used for both connecting either a fluorescent lamp or an LED lamp. Based upon the connection of either a fluorescent lamp or an LED lamp, a different operating mode is selected. The document US 2011/0248647 A1 shows a light emitting device and light fixture using the lighting device. Especially, this document deals with detecting the existence or absence of a connected load. The document US 2013/0236203 A1 shows a power supply device and image forming apparatus. By alternating the timing of switching of the converter, the output power is regulated. The document US 2015/285872 A1 discloses a power supply apparatus configured to regulate an output voltage, and independently thereof detect a connection state of a load only in case of a no-load condition, in which condition a switching frequency may be decreased.

### Summary of Invention

### Technical Problem and Solution

The present invention is defined by the independent claims. Preferred embodiments are set forth in the dependent claims and in the following description and drawings. Implementations which do not fall within the scope of protection defined by the independent claims, are to be understood as examples helpful for understanding the invention, but not as inventive embodiments. To remedy the foregoing defects in the prior art, the technical problem to be resolved by the present invention is to provide a power supply apparatus and a method of operating the same that have a simple circuit structure or design, low costs, and lower power consumption and can provide a plurality of current output specifications.

### Advantageous Effects of Invention

The implementation of the power supply apparatus and the method of operating the same of the present invention can achieve the following beneficial effects:
1. The power supply apparatus of the present invention can provide a plurality of current output specifications to drive a load to produce different lighting effects. According to an individual electricity consumption requirement, a user may selectively connect the positive input end and the negative input end of the load respectively to the positive output terminal and the first negative output terminal of the current output port, so that the power supply apparatus outputs a first drive current (for example, a high current) to the load, so that the load works in a high power consumption mode to produce a more bright and blazing lighting effect, or connect the positive input end and the negative input end of the load respectively to the positive output terminal and the second negative output terminal of the current output port, so that the power supply apparatus outputs a second drive current (for example, a low current) different from the first drive current to the load, so that the load works in an energy-saving mode to produce a relatively dim lighting effect, thereby greatly reducing the energy consumption of the load and attaining a perfect balance between a lighting effect and power consumption control of an electronic component. That is, the power supply apparatus of the present invention can be used in combination with the load, to achieve double effects of a high-intensity lamp and an energy-saving lamp.
   The power supply apparatus of the present invention comprises a power supply mode setting sub-circuit which can be used to change the sensing resistance which detects the current flowing the direct current conversion circuit. The control circuit which controls the operation of the direct current conversion circuit and thus of the current supplied to the load may detect the voltage sensed on the power supply mode setting sub-circuit. The sensing resistance of the power supply mode setting sub-circuit can be changed by a first MOS transistor. The switch sub-circuit may influence the sensing resistance of the power supply mode setting sub-circuit and thus influence the operation of the direct current conversion circuit and thereby the current supplied to the load. For example the power supply apparatus can output a first preset current to the load or a second preset current to the load depending on the signal provided by the switch subcircuit.
2. The power supply apparatus of the present invention can satisfy electricity consumption requirements of different users, is exceptionally user-friendly, and has a remarkable energy-saving effect. The power supply apparatus of the present invention further has outstanding advantages of both a simple circuit structure and relatively low costs.

### Brief Description of Drawings

### Description of Drawings

A power supply apparatus of the present invention is described below with reference to the accompanying drawings and specific implementation manners,
FIG. 1 is a circuit diagram of an existing power supply apparatus;
FIG. 2 is a structural block diagram of a power supply apparatus provided in a first preferred embodiment of the present invention;
FIG. 3 is a structural block diagram of a power supply mode selection circuit of the power supply apparatus shown in FIG. 2;
FIG. 4 is a first circuit diagram of the power supply apparatus shown in FIG. 2;
FIG. 5 is a second circuit diagram of the power supply apparatus shown in FIG. 2;
FIG. 6 is a third circuit diagram of the power supply apparatus shown in FIG. 2;
FIG. 7 is a flowchart of a method provided in a second preferred embodiment of the present invention; and

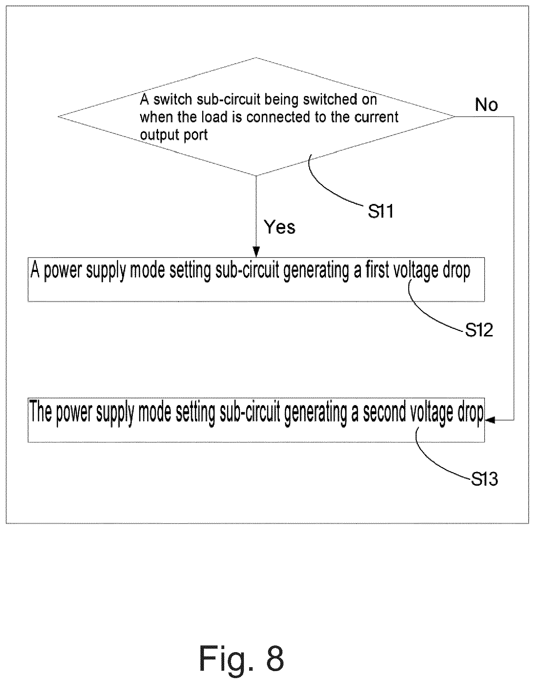

FIG. 8 is a flowchart of implementing Step S1 in the method shown in FIG. 7.

### Mode for the Invention

### Mode for Invention

To make the inventive objectives, technical solutions, and technical effects of the present invention more comprehensible, the present invention is further described below in detail with reference to the accompanying drawings and the specific implementation manners. It should be understood that the specific implementation manners described in the specification are only used to explain the present invention rather than to limit the present invention.

A specific implementation of a power supply apparatus of the present invention is described below with reference to the accompanying drawings and the specific embodiments:

To remedy various technical defects that exist in an existing power supply apparatus, the present invention provides an improved power supply apparatus that has a simple circuit structure or design and low power consumption and can provide a plurality of current output specifications.

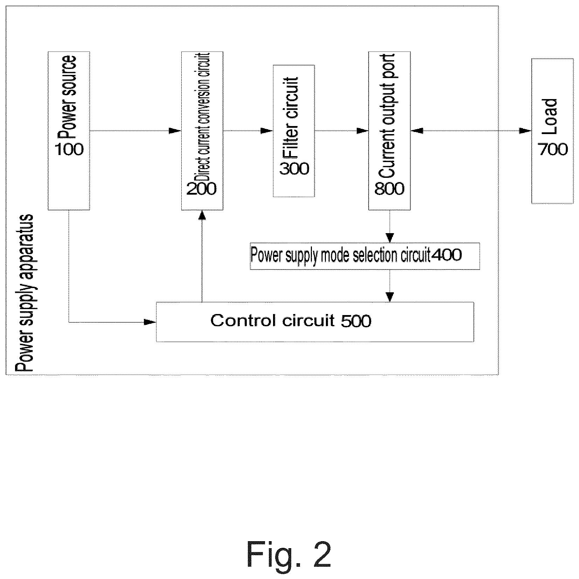

As shown in FIG. 2, the power supply apparatus comprises a power source 100, a current output port 800, a direct current conversion circuit 200 connected between the power source 100 and the current output port 800, a power supply mode selection circuit 400 connected between the direct current conversion circuit 200 and the current output port 800, and a control circuit 500 connected between the power supply mode selection circuit 400 and the direct current conversion circuit 200.

The direct current conversion circuit 200 may be formed by a switched converter like a flyback converter, halfbridge converter, buck converter, boost converter, buck-boost converter or another switched mode power supply converter topology.

The power supply mode selection circuit 400 is configured to generate a first power supply mode (for example, a high-current output mode) setting signal or a second power supply mode (for example, a low-current output mode) setting signal according to a connection manner between a load 700 and the current output port 800.

The load 700 may be formed by a light source like a light emitting diode (LED) or a light emitting diode array (LED array).

The control circuit 500 is configured to send, when the first power supply mode setting signal is received, a first control signal to the direct current conversion circuit 200, and the direct current conversion circuit 200 is configured to enter, when the first control signal is received, a first power supply mode, and perform direct current conversion according to a first working frequency to output a first drive current (for example, a high current) corresponding to the first working frequency to the load 700.

The control circuit 500 is further configured to send, when the second power supply mode setting signal is received, a second control signal to the direct current conversion circuit 200, and the direct current conversion circuit 200 is further configured to enter, when the second control signal is received, a second power supply mode, and perform direct current conversion according to a second working frequency to output a second drive current (for example, a low current) corresponding to the second working frequency to the load 700.

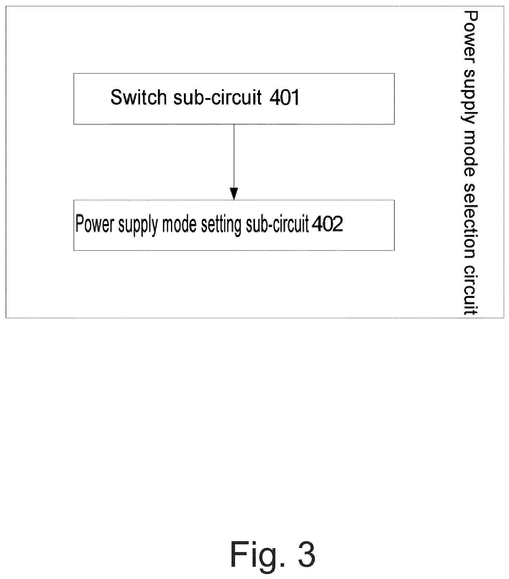

Further, as shown in FIG. 3, the power supply mode selection circuit 400 further comprises:
a switch sub-circuit 401, connected to the current output port 800, and configured to generate different switch signals according to different connection manners between the load 700 and the current output port 800;
a power supply mode setting sub-circuit 402, connected to the switch sub-circuit 401 , and configured to generate different voltage drops according to the switch signals.

The control circuit 500 is specifically configured to detect a voltage drop on the power supply mode setting sub-circuit 402, determine, according to the detected voltage drop, the first power supply mode or the second power supply mode that the direct current conversion circuit 200 is to be in, and send a first frequency adjustment instruction or a second frequency adjustment instruction to the direct current conversion circuit 200, so that the direct current conversion circuit 200 enters the first power supply mode or the second power supply mode and performs direct current conversion work in the first power supply mode or the second power supply mode to output the first drive current or the second drive current.

Further, the current output port 800 comprises a positive output terminal LED+, a first negative output terminal LED-1, and a second negative output terminal LED-2.

The switch sub-circuit 401 is specifically configured to be switched on or cut off when it is detected that a positive input end and a negative input end of the load 700 are respectively connected to the positive output terminal LED+ and the first negative output terminal LED-1 of the current output port 800, or to be cut off or switched on when it is detected that the positive input end and the negative input end of the load 700 are respectively connected to the positive output terminal LED+ and the second negative output terminal LED-2 of the current output port 800.

The power supply mode setting sub-circuit 402 is specifically configured to generate a first voltage drop when the switch sub-circuit 401 is switched on, or generate a second voltage drop when the switch sub-circuit 401 is cut off.

The control circuit 500 is specifically configured to send, when the first voltage drop is detected, the first frequency adjustment instruction to the direct current conversion circuit 200, so that the direct current conversion circuit 200 performs direct current conversion working according to the first working frequency to output the first drive current (for example, a high current) corresponding to the first working frequency to the load 700, or when the second voltage drop is detected, send the second frequency adjustment instruction to the direct current conversion circuit 200, so that the direct current conversion circuit 200 performs direct current conversion working according to the second working frequency to output the second drive current (for example, a low current) corresponding to the second working frequency to the load 700.

The load 700 in the present invention may be various home lighting devices (for example, a light source like a LED, a desk lamp) or home electrical appliances.

Preferably, the control circuit 500 outputs the first frequency adjustment instruction to adjust a duty cycle of the direct current conversion circuit 200, so that the direct current conversion circuit 200 performs direct current conversion working according to the first working frequency to output the first drive current that satisfies a working requirement of the load 700, or the direct current conversion circuit 200 performs direct current conversion working according to the second working frequency to output the second drive current that satisfies a working requirement of the load 700.

Preferably, the power supply apparatus further comprises a filter circuit 300, connected between the direct current conversion circuit 200 and the power supply mode selection circuit 400, and configured to perform further filtering processing on the first drive current or the second drive current output by the direct current conversion circuit 200. The filter circuit 300 may produce the effects of improving the working stability of the load 700 and ensuring that a user obtains a stable lighting effect.

In conclusion, the power supply apparatus of the present invention can provide at least two current output specifications and drive the load 700 to produce different lighting effects. The power supply apparatus of the present invention can be used in combination with the load 700, to achieve double effects of a high-intensity lamp and an energy-saving lamp. The power supply apparatus of the present invention can satisfy electricity consumption requirements of different users, is exceptionally user-friendly, has a remarkable energy-saving effect, and further has outstanding advantages of both a simple circuit structure and low costs.

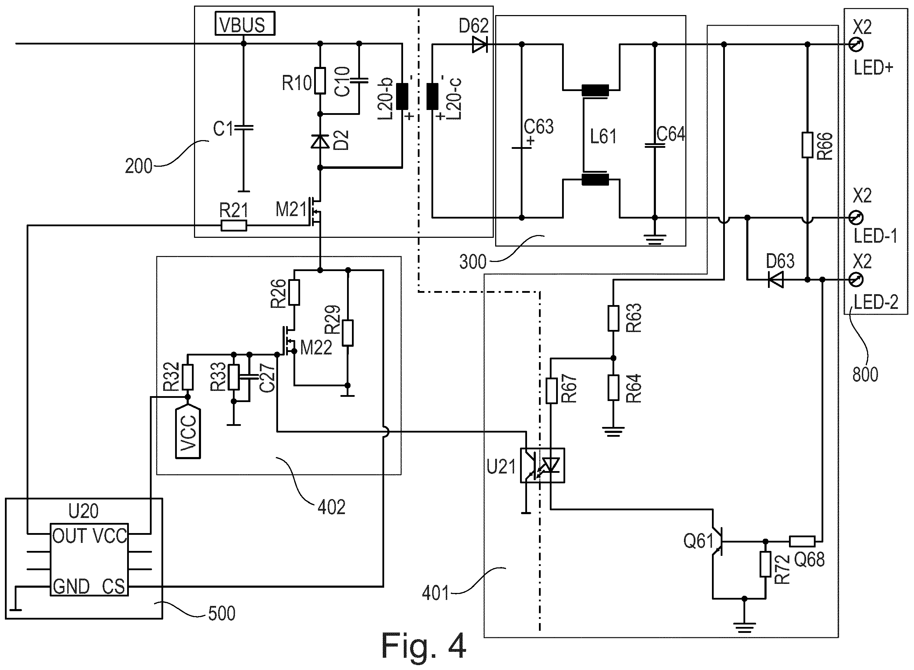

The present invention discloses three power supply apparatuses that can provide at least two current output specifications. The respective circuit structures and working principles of the three power supply apparatuses according to the present invention are specifically described below with reference to Figs. 4-6:

### Embodiment 1

This embodiment discloses a first power supply apparatus. FIG. 4 is a circuit diagram of the first power supply apparatus of the present invention. As shown in FIG. 4, in the first power supply apparatus, the switch sub-circuit 401 comprises a first diode D63, a first resistor R66, a second resistor R68, a third resistor R72, a fourth resistor R63, a fifth resistor R64, a sixth resistor R67, a first triode Q61, and a first optical coupler U21. The power supply mode setting sub-circuit comprises a first MOS transistor M22, an eighth resistor R26 and a ninth resistor R29 that are connected in parallel. Further there is a tenth resistor R32, an eleventh resistor R33, and a first capacitor C27 connected in parallel at two ends of the eleventh resistor R33.

One end of the first resistor R66 is connected to the positive output terminal LED+. The other end of the first resistor R66 is connected between a positive electrode of the first diode D63 and the second negative output terminal LED-2. A negative electrode of the first diode D63 and the first negative output terminal LED-1 are grounded simultaneously. The first resistor (R66) is an alternative resistor.

A base of the first triode Q61 is connected between the second resistor R68 and the third resistor R72. An emitter of the first triode (261 and the other end of the third resistor R72 are grounded simultaneously. The other end of the second resistor R68 is connected between the first diode D63 and the second negative output terminal LED-2. A collector of the first triode Q61 is connected to a cathode of an input end of the first optical coupler U21. An emitter of a first output end of the first optical coupler U21 is grounded. A collector of a second output end of the first optical coupler U21 is connected between a gate of the first MOS transistor M22 and the first capacitor C27. The other end of the first capacitor C27 is grounded. A source of the first MOS transistor M22 and one end of the ninth resistor R29 are grounded simultaneously. A drain of the first MOS transistor is connected to one end of the eighth resistor R26. The eighth resistor R26 and the other end of the ninth resistor R29 are connected to the direct current conversion circuit 200 and the control circuit 500 simultaneously. One end of the tenth resistor R32 is connected to a VCC pin of the control circuit 500. The other end of the tenth resistor R32 is connected to one end of the eleventh resistor R33. The other end of the eleventh resistor R33 is grounded. The eleventh resistor R33 and the first capacitor C27 form a filter element to filter out high frequency noise from the driver signal provided to the gate of the first MOS transistor M22 via the tenth resistor R32 from the first optical coupler U21.

One end of the sixth resistor R67 is connected to an anode of the input end of the first optical coupler U21. The other end of the sixth resistor R67 is connected between the fourth resistor R63 and the fifth resistor R64. The other end of the fourth resistor R63 is connected to the positive output terminal LED+. The other end of the fifth resistor R64 is grounded.

The direct current conversion circuit 200 is in this example formed by a flyback converter. The direct current conversion circuit 200 comprises a third MOS transistor M21 which is controlled by the control circuit 500. When the third MOS transistor M21 is switched on by the control circuit 500 a current will flow through the primary winding L20-b of the power transformer. When the control circuit 500 controls the third MOS transistor M21 to switch off the current through the primary winding L20-b of the power transformer will be interrupted and the energy stored in the power transformer will lead to a current flow in the secondary winding L20-c of the power transformer which current will flow through the second diode D62 and the filter circuit 300. The direct current conversion circuit 200 may comprise a filter capacitor Cl on its input side. The direct current conversion circuit 200 is supplied by power source 100. The power source 100 may by a rectified alternating voltage or a direct current voltage supplied from an active power factor correction circuit like a boost converter.

The working principle of the first power supply apparatus is as follows:

When the positive input end and the negative input end of the load 700 are respectively connected to the positive output terminal LED+ and the first negative output terminal LED-1 of the current output port 800, because the first negative output terminal LED-1 is grounded, an output current of the direct current conversion circuit 200 does not flow through the first diode D63. The first diode D63 has no voltage drop. The first triode Q61 is cut off. No current flows through the input end (that is, a light-emitting diode side) of the first optical coupler U21. The first optical coupler U21 is cut off. The current flows through the tenth resistor R32, the eleventh resistor R33, and the first MOS transistor M22. The gate of the first MOS transistor M22 is at a high level. The source of the first MOS transistor M22 is grounded. In this case, the first MOS transistor M22 is switched on. The eighth resistor R26 and the ninth resistor R29 are connected in parallel. The current flows through the eighth resistor R26 and the ninth resistor R29 that are connected in parallel, to generate a first voltage drop. When detecting the first voltage drop at a current sensing pin end of the control circuit 500, the control circuit 500 sends the first frequency adjustment instruction to the direct current conversion circuit 200 to adjust a duty cycle of the direct current conversion circuit 200, so that the direct current conversion circuit 200 performs direct current conversion working according to the first working frequency (a PWM signal having a high duty cycle) to output the first drive current (that is, a high current) to the load 700. The load 700 produces a bright and blazing lighting effect.

When the positive input end and the negative input end of the load 700 are respectively connected to the positive output terminal LED+ and the second negative output terminal LED-2 of the current output port 800, an output current of the direct current conversion circuit 200 flows through the first diode D63. A voltage drop is generated at two ends of a first diode D63. In this case, the base of the first triode Q61 is at a high level. The emitter of the first triode Q61 is grounded. Therefore, the first triode Q61 is switched on. The current flows through the input end (a light-emitting diode side) of the first optical coupler U21. Therefore, the first optical coupler U21 is switched on. As a result, the gate of the first MOS transistor M22 is grounded. Therefore, the first MOS transistor M22 is cut off. The circuit of the eighth resistor R26 is switched off. The current only flows through the ninth resistor R29. A second voltage drop is generated at two ends of the ninth resistor R29. When detecting the second voltage drop at a current sensing pin end of the control circuit 500, the control circuit 500 sends the second frequency adjustment instruction to the direct current conversion circuit 200 to adjust a duty cycle of the direct current conversion circuit 200, so that the direct current conversion circuit 200 performs direct current conversion working according to the second working frequency (a PWM signal having a low duty cycle) to output the second drive current (that is, a low current) to the load 700. The load 700 produces a relatively dim lighting effect, thereby reducing the power consumption of the load 700.

In short, in the first power supply apparatus provided in the present invention, when the negative input end of the load 700 is connected to the first negative-going output terminal LED-1 of the current output port 800, the power supply apparatus is set to a high-current power supply mode, and a high current is output to the load 700, so that the load 700 produces a bright and blazing lighting effect, so as to make maximum use of the lighting function. When the negative input end of the load 700 is connected to the second negative-going output terminal LED-2 of the current output port 800, the power supply apparatus is set to a low-current power supply mode, a low current is output to the load 700, so that the load 700 produces a relatively dim lighting effect, thereby saving energy.

The power supply mode setting sub-circuit 402 comprising the first MOS transistor M22, the eighth resistor R26 and the ninth resistor R29 can be used to change the sensing resistance which detects the current flowing through second MOS transistor M21 and thus through the direct current conversion circuit 200. The control circuit 500 which controls the operation of the direct current conversion circuit 200 and thus of the current supplied to the load 700 will detect the voltage sensed on the power supply mode setting sub-circuit 402. With the aid of the first MOS transistor M22 the sensing resistance of the power supply mode setting sub-circuit 402 can be changed as the first MOS transistor M22 may switch the eighth resistor R26 in parallel to the ninth resistor R29. Thereby the switch sub-circuit 401 may influence the sensing resistance of the power supply mode setting sub-circuit 402 and thus influence the operation of the direct current conversion circuit 200 and thereby the current supplied to the load 700.

For example the power supply apparatus can output a first preset current to the load 700 or a second preset current to the load 700 depending on the signal provided by the switch sub-circuit 401. When the positive input end and the negative input end of the load 700 are respectively connected to the positive output terminal LED+ and the second negative output terminal LED-2 of the current output port 800, a second preset current may be provided to the load 700. When the positive input end and the negative input end of the load 700 are respectively connected to the positive output terminal LED+ and the first negative output terminal LED-1 of the current output port 800, a first preset current may be provided to the load 700.

### Embodiment 2

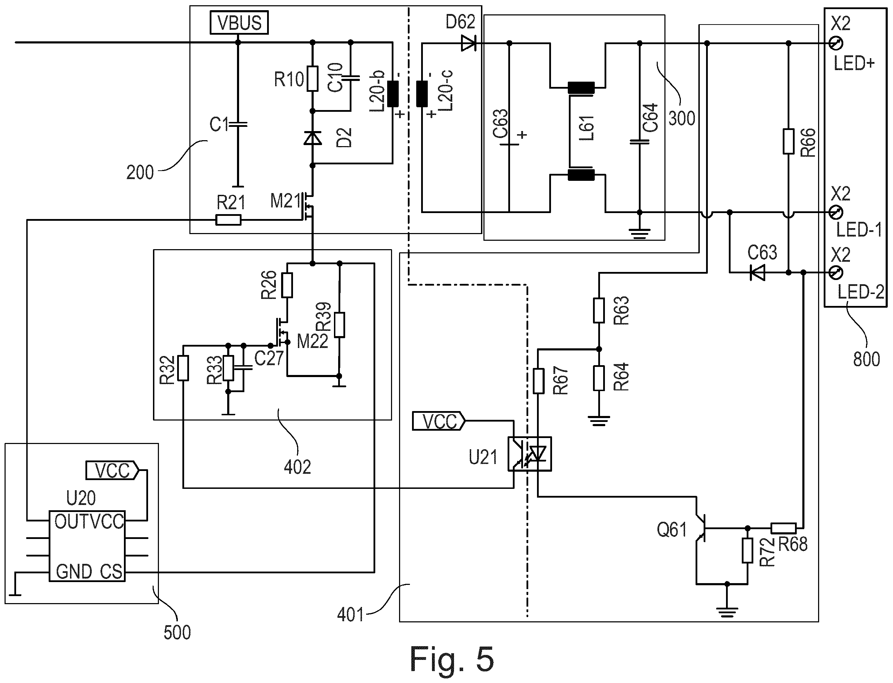

This embodiment provides a second power supply apparatus. FIG. 5 is a circuit diagram of the second power supply apparatus of the present invention. As shown in FIG. 5, in the second power supply apparatus, the switch sub-circuit 401 comprises a first diode D63, a first resistor R66, a second resistor R68, a third resistor R72, a fourth resistor R63, a fifth resistor R64, a sixth resistor R67, a first triode Q61, and a first optical coupler U21. The power supply mode setting sub-circuit 402 comprises a first MOS transistor M22, an eighth resistor R26 and a ninth resistor R29 that are connected in parallel, a tenth resistor R32, an eleventh resistor R33, and a first capacitor C27 connected in parallel at two ends of the eleventh resistor R33;

One end of the first resistor R66 is connected to the positive output terminal LED+. The other end of the first resistor R66 is connected between a positive electrode of the first diode D63 and the second negative output terminal LED-2. A negative electrode of the first diode D63 and the first negative output terminal LED-1 are grounded simultaneously. The first resistor (R66) is an alternative resistor.

A base of the first triode Q61 is connected between the second resistor R68 and the third resistor R72. An emitter of the first triode Q61 and the other end of the third resistor R72 are grounded simultaneously. The other end of the second resistor R68 is connected between the positive electrode of the first diode D63 and the second negative output terminal LED-2. A collector of the first triode Q61 is connected to a cathode of an input end of the first optical coupler U21. A collector of a first output end of the first optical coupler U21 is connected to a VCC pin of the control circuit 500. An emitter of a second output end of the first optical coupler U21 is connected to one end of the tenth resistor R32. One end of the tenth resistor R32 is connected to one end of the eleventh resistor R33. The other end of the eleventh resistor R33 is grounded.

One end of the first capacitor C27 is grounded. The other end of the first capacitor C27 is connected to a gate of the first MOS transistor M22. A source of the first MOS transistor M22 and one end of the ninth resistor R29 are grounded simultaneously. The drain of the first MOS transistor M22 is connected to one end of the eighth resistor R26. The eighth resistor R26 and the other end of the ninth resistor R29 are connected to the direct current conversion circuit 200 and the control circuit 500 simultaneously.

One end of the sixth resistor R67 is connected to the input end of the first optical coupler U21. The other end of the sixth resistor R67 is connected between the fourth resistor R63 and the fifth resistor R64. The other end of the fourth resistor R63 is connected to the positive output terminal LED+. The other end of the fifth resistor R64 is grounded.

The control logic of the second power supply apparatus of the present invention is the exact opposite of the control logic of the first power supply apparatus of the present invention.

The working principle of the second power supply apparatus is as follows:

When the positive input end and the negative input end of the load 700 are respectively connected to the positive output terminal LED+ and the first negative output terminal LED-1 of the current output port 800, the first negative output terminal LED-1 is grounded. An output current of the direct current conversion circuit 200 does not flow through the first diode D63. The first diode D63 has no voltage drop. The first triode Q61 is cut off. No current flows through the input end (that is, a light-emitting diode side) of the first optical coupler U21. The first optical coupler U21 is cut off. The gate of the first MOS transistor M22 is at a low level. The source of the first MOS transistor M22 is grounded. In this case, the first MOS transistor M22 is cut off. In this case, the circuit of the eighth resistor R26 is switched off. The current only flows through the ninth resistor R29. A second voltage drop is generated at two ends of the ninth resistor R29. In this case, when detecting the second voltage drop at a current sensing pin end of the control circuit 500, the control circuit 500 sends the second frequency adjustment instruction to the direct current conversion circuit 200 to adjust a duty cycle of the direct current conversion circuit 200, so that the direct current conversion circuit 200 performs direct current conversion working according to the second working frequency to output the second drive current (that is, a low current) to the load 700. The load 700 produces a relatively dim lighting effect, thereby saving energy.

When the positive input end and the negative input end of the load 700 are respectively connected to the positive output terminal LED+ and the second negative output terminal LED-2 of the current output port 800, an output current of the direct current conversion circuit 200 flows through the first diode D63. A voltage drop is generated at two ends of a first diode D63. The base of the first triode Q61 is at a high level. The emitter of the first triode Q61 is grounded. Therefore, the first triode Q61 is switched on. Therefore, the current flows through the input end (a light-emitting diode side) of the first optical coupler U21. The first optical coupler U21 is switched on. The current flows through the tenth resistor R32 and the first MOS transistor M22. The gate of the first MOS transistor M22 is at a high level. The source of the first MOS transistor M22 is grounded. In this case, the first MOS transistor M22 is switched on. The current flows through the eighth resistor R26 and the ninth resistor R29 that are connected in parallel, to generate a first voltage drop. In this case, when detecting the first voltage drop at a current sensing pin end of the control circuit 500, the control circuit 500 sends the first frequency adjustment instruction to the direct current conversion circuit 200 to adjust a duty cycle of the direct current conversion circuit 200, so that the direct current conversion circuit 200 performs direct current conversion working according to the first working frequency to output the first drive current (that is, a high current) to the load 700. The load 700 produces a bright and blazing lighting effect.

In short, in the second power supply apparatus provided in the present invention, when the negative input end of the load 700 is connected to the first negative-going output terminal LED-1 of the current output port 800, the power supply apparatus is set to a low-current power supply mode, and a low current is output to the load 700, so that the load 700 produces a relatively dim lighting effect, thereby saving energy. When the negative input end of the load 700 is connected to the second negative-going output terminal LED-2 of the current output port 800, the power supply apparatus is set to a high-current power supply mode, and a high current is output to the load 700, so that the load 700 produces a bright and blazing lighting effect, so as to make maximum use of the lighting function.

### Embodiment 3

This embodiment discloses a third power supply apparatus. The power supply apparatus further comprises a secondary side power supply circuit 600, connected to the power supply mode selection circuit 400, and configured to supply power separately to the power supply mode selection circuit 400.

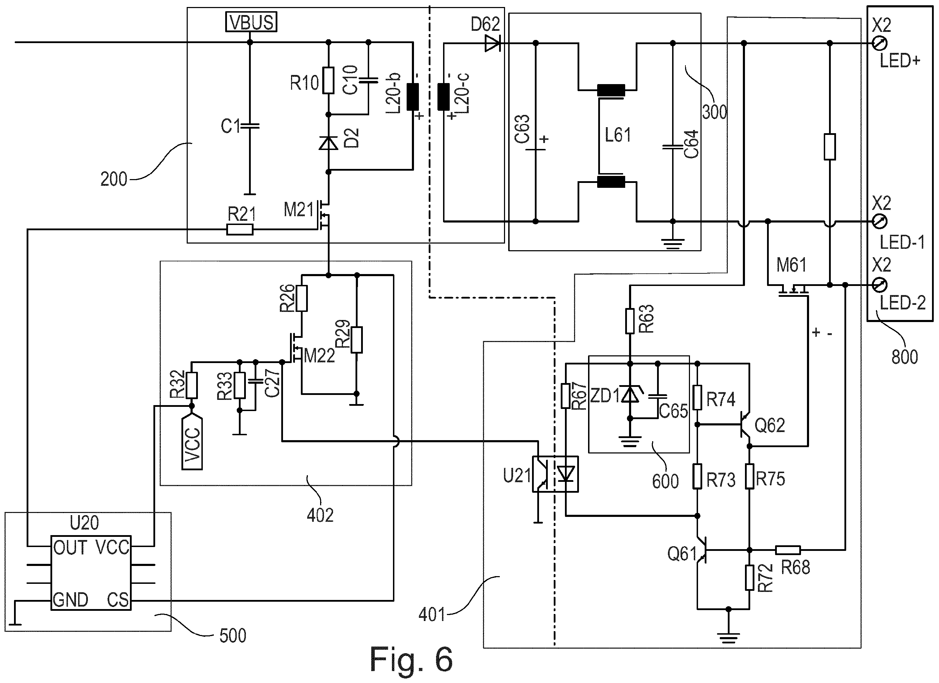

FIG. 6 is a circuit diagram of the third power supply apparatus of the present invention. As shown in FIG. 6, in the third power supply apparatus, the switch subcircuit 401 comprises a first resistor R66, a second resistor R68, a third resistor R72, a fourth resistor R63, a sixth resistor R67, a second MOS transistor M61, a first triode Q61, a PNP-type second triode Q62, a twelfth resistor R73, a thirteenth resistor R74, a fourteenth resistor R75, and a first optical coupler U21. The power supply mode setting sub-circuit 402 comprises a first MOS transistor M22, an eighth resistor R26 and a ninth resistor R29 that are connected in parallel, a tenth resistor R32, an eleventh resistor R33, and a first capacitor C27 connected in parallel at two ends of the eleventh resistor R33.

The secondary side power supply circuit 600 comprises a voltage stabilizing diode ZDI and a second capacitor C65 connected in parallel at two ends of the voltage stabilizing diode ZDI.

One end of the first resistor R66 is connected to the positive output terminal LED+. The other end of the first resistor R66 is connected between a drain of the second MOS transistor M61 and the second negative output terminal LED-2. A source of the second MOS transistor M61 and the first negative output terminal LED-1 are grounded simultaneously. The first resistor (R66) is an alternative resistor.

A base of the first triode Q61 is connected among the second resistor R68, the third resistor R72, and the fourteenth resistor R75. An emitter of the first triode Q61 and the other end of the third resistor R72 are grounded simultaneously. The other end of the second resistor R68 is connected between the drain of the second MOS transistor M61 and the second negative output terminal LED-2. A collector of the first triode Q61 is connected to a cathode of an input end of the first optical coupler U21 and one end of the twelfth resistor R73. A base of the second triode Q62 is connected between the twelfth resistor R73 and the thirteenth resistor R74. An emitter of the second triode Q62 is connected to the other end of the thirteenth resistor R74 and one end of the second capacitor C65 simultaneously. The other end of the second capacitor C65 is grounded. A collector of the second triode Q62 is connected to a gate of the second MOS transistor M61 and one end of the fourteenth resistor R75 simultaneously. The other end of the fourteenth resistor R75 is connected among the base of the first triode Q61, the second resistor R68, and the third resistor R72.

One end of the fourth resistor R63 is connected to the positive output terminal LED+. The other end of the fourth resistor R63 is connected to a negative electrode of the voltage stabilizing diode ZDI and one end of the sixth resistor R67 simultaneously. A positive electrode of the voltage stabilizing diode ZDI is grounded. The other end of the sixth resistor R67 is connected to an anode of the input end of the first optical coupler U21.

An emitter of a first output end of the first optical coupler U21 is grounded. A collector of a second output end of the first optical coupler U21 is connected between a gate of the first MOS transistor M22 and the first capacitor C27. The other end of the first capacitor C27 is grounded. A source of the first MOS transistor M22 and one end of the ninth resistor R29 are grounded simultaneously. A drain of the first MOS transistor M22 is connected to one end of the eighth resistor R26. The eighth resistor R26 and the other end of the ninth resistor R29 are connected to the direct current conversion circuit 200 and the control circuit 500 simultaneously. One end of the tenth resistor R32 is connected to a VCC pin of the control circuit 500. The other end of the tenth resistor R32 is connected to one end of the eleventh resistor R33. The other end of the eleventh resistor R33 is grounded.

The control logic of the third power supply apparatus of the present invention is the same as the control logic of the first power supply apparatus of the present invention. The major differences between the third power supply apparatus and the first power supply apparatus lie in that the second MOS transistor M61 is used in place of the first diode D63 and the secondary side power supply circuit 600 is added.

The working principle of the circuit of the third power supply apparatus is as follows: In the circuit structure of the third power supply apparatus, when the positive input end and the negative input end of the load 700 are respectively connected to the positive output terminal LED+ and the first negative output terminal LED-1 of the current output port 800, because the first negative-going output terminal LED-1 is grounded, an output current of the direct current conversion circuit 200 does not flow through the second MOS transistor M61. The first triode Q61 is cut off. No current flows through the input end (that is, a light-emitting diode side) of the first optical coupler U21. The first optical coupler U21 is cut off. In this case, the current flows through the tenth resistor R32, the eleventh resistor R33, and the first MOS transistor M22. The gate of the first MOS transistor M22 is at a high level. The source of the first MOS transistor M22 is grounded. In this case, the first MOS transistor M22 is switched on. The eighth resistor R26 and the ninth resistor R29 are connected in parallel. The current flows through the eighth resistor R26 and the ninth resistor R29 that are connected in parallel, to generate a first voltage drop. In this case, when detecting the first voltage drop at a current sensing pin end of the control circuit 500, the control circuit 500 sends the first frequency adjustment instruction to the direct current conversion circuit 200 to adjust a duty cycle of the direct current conversion circuit 200, so that the direct current conversion circuit 200 performs direct current conversion working according to the first working frequency to output the first drive current (that is, a high current) to the load 700. The load 700 produces a bright and blazing lighting effect.

When the positive input end and the negative input end of the load 700 are respectively connected to the positive output terminal LED+ and the second negative output terminal LED-2 of the current output port 800, an output current of the direct current conversion circuit 200 flows through the second MOS transistor M61. In this case, the base of the first triode Q61 is at a high level. The emitter of the first triode Q61 is grounded. Therefore, the first triode Q61 is switched on. The current flows through the input end (a light-emitting diode side) of the first optical coupler U21. The first optical coupler U21 is switched on. As a result, the gate of the first MOS transistor M22 is grounded. The first MOS transistor M22 is cut off. Therefore, the circuit of the eighth resistor R26 is switched off. The current only flows through the ninth resistor R29. A second voltage drop is generated at two ends of the ninth resistor R29. When detecting the second voltage drop at a current sensing pin end of the control circuit 500, the control circuit 500 sends the second frequency adjustment instruction to the direct current conversion circuit 200 to adjust a duty cycle of the direct current conversion circuit 200, so that the direct current conversion circuit 200 performs direct current conversion working according to the second working frequency to output the second drive current (that is, a low current) to the load 700. The load 700 produces a relatively dim lighting effect, thereby reducing the power consumption of the load 700.

In short, in the third power supply apparatus provided in the present invention, when the negative input end of the load 700 is connected to the first negative-going output terminal LED-1 of the current output port 800, the power supply apparatus is set to a high-current power supply mode, and a high current is output to the load 700, so that the load 700 produces a bright and blazing lighting effect, so as to make maximum use of the lighting function. When the negative input end of the load 700 is connected to the second negative-going output terminal LED-2 of the current output port 800, the power supply apparatus is set to a low-current power supply mode, and a low current is output to the load 700, so that the load 700 produces a relatively dim lighting effect, thereby saving energy.

In addition, in the circuit structure of the third power supply apparatus of the present invention, by means of the circuit structure or design of the power supply mode selection circuit 400, when the first triode Q61 is switched on, the second triode Q62 is also switched on, and when the first triode (261 is cut off, the second triode Q62 is also cut off. Therefore, when the positive input end and the negative input end of the load 700 are respectively connected to the positive output terminal LED+ and the second negative output terminal LED-2 of the current output port 800, the first triode Q61 and the second triode Q62 are in an on state simultaneously. In this case, the gate of the second MOS transistor M61 is at a high level, so that the second MOS transistor M61 is kept in an on state. Moreover, the second MOS transistor M61 having excessively low on-resistance can further reduce the loss of the power supply apparatus of the present invention, thereby saving energy.

### Embodiment 4

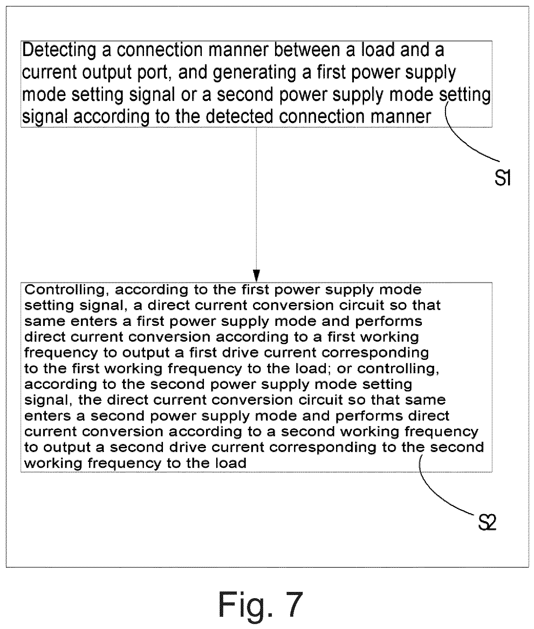

Correspondingly, based on the power supply apparatuses shown in FIG. 2 to FIG. 6, the present invention further provides a method of operating the same. As shown in FIG. 7, the method comprises the following steps:
S1: detecting a connection manner between the load 700 and the current output port 800, and generating a first power supply mode setting signal or a second power supply mode setting signal according to the detected connection manner; and
S2: controlling, according to the first power supply mode setting signal, the direct current conversion circuit 200 so that same enters a first power supply mode and performs direct current conversion according to a first working frequency to output a first drive current corresponding to the first working frequency to the load 700; or
   controlling the direct current conversion circuit 200 according to the second power supply mode setting signal so that same enters a second power supply mode and performs direct current conversion according to a second working frequency to output a second drive current corresponding to the second working frequency to the load 700.

Further, the foregoing Step S1 specifically comprises:
S11: enabling the switch sub-circuit 401 to be switched on or cut off according to the connection manner between the load 700 and the current output port 800; and
S12: if the switch sub-circuit 401 is switched on, generating, by the power supply mode setting sub-circuit 402, a first voltage drop.

The foregoing Step S1 further comprises:
S13: if the switch sub-circuit 401 is cut off, generating, by the power supply mode setting sub-circuit 402, a second voltage drop.

Further, the foregoing Step S2 specifically comprises:
S21: if the control circuit 500 detects the first voltage drop, sending the first frequency adjustment instruction to the direct current conversion circuit 200, so that the direct current conversion circuit 200 enters the first power supply mode and performs direct current conversion according to the first working frequency to output the first drive current corresponding to the first working frequency to the load 700.

The foregoing Step S2 further comprises:
S22: if the control circuit 500 detects the second voltage drop, sending the second frequency adjustment instruction to the direct current conversion circuit 200, so that the direct current conversion circuit 200 enters the second power supply mode and perform direct current conversion according to the second working frequency to output the second drive current corresponding to the second working frequency to the load 700.

In conclusion, the implementation of the power supply apparatus of the present invention and the method of operating the same may provide a user with at least two current output specifications and drive the load 700 to produce different lighting effects. According to a respective electricity consumption requirement, the user may selectively connect the positive input end and the negative input end of the load 700 respectively to the positive output terminal LED+ and the first negative output terminal LED-1 of the current output port 800, so that the power supply apparatus outputs a first drive current (for example, a high current) to the load 700, so that the load 700 works in a high power consumption mode to produce a brighter and more blazing lighting effect, or connect the positive input end and the negative input end of the load 700 respectively to the positive output terminal LED+ and the second negative output terminal LED-2 of the current output port 800, so that the power supply apparatus outputs a second drive current (for example, a low current) different from the first drive current to the load 700, so that the load 700 works in an energy-saving mode to produce a relatively dim lighting effect, thereby greatly reducing the energy consumption of the load 700 and attaining a perfect balance between a lighting effect and power consumption control of an electronic component.

Although the power supply apparatus that can provide two current output specifications is described in the embodiments of the present invention, the circuit structure of the power supply apparatus of the present invention may be simply copied or improved and a quantity of negative output terminals may be correspondingly increased to implement various power supply apparatuses that can provide a plurality of current output specifications, and these power supply apparatuses also shall fall within the protection scope of the claims.

The embodiments of the present invention are described above with reference to the accompanying drawings. However, the present invention is not limited to the foregoing specific implementation manners. The foregoing specific implementation manners are merely illustrative rather than limitative. In light of the teachings of the present invention, a person of ordinary skill in the art may further use various forms without departing from the protection scope of the claims. In addition, although some specific terms are used in the specification, these terms are merely used for ease of description, while the scope of protection is defined by the claims.

## Claims

1. A power supply apparatus, comprising:
a power source (100),
a current output port (800),
a direct current conversion circuit (200), and
a power supply mode selection circuit (400, 401, 402), and
a control circuit (500) connected between the power supply mode selection circuit (400, 401, 402) and the direct current conversion circuit (200),
wherein the power supply mode selection circuit (400, 401, 402) is configured to generate a first power supply mode setting signal or a second power supply mode setting signal according to a connection manner between a load (700) and the current output port (800);
wherein the control circuit (500) is configured to send, when the first power supply mode setting signal is received, a first control signal to the direct current conversion circuit (200), so that the direct current conversion circuit (200) enters a first power supply mode and performs direct current conversion according to a first working frequency to output a first drive current corresponding to the first working frequency to the load (700) ;
wherein the control circuit (500) is further configured to send, when the second power supply mode setting signal is received, a second control signal to the direct current conversion circuit (200), so that the direct current conversion circuit (200) enters a second power supply mode and performs direct current conversion according to a second working frequency to output a second drive current corresponding to the second working frequency to the load (700),
wherein the power supply mode selection circuit (400, 401, 402) further comprises:
a switch sub-circuit (401) connected to the current output port (800) and configured to generate different switch signals according to different connection manners between the load (700) and the current output port (800); and
a power supply mode setting sub-circuit (402) comprising an eighth resistor (R26) and a ninth resistor (R29, R39) that are connected in parallel, the eighth resistor (R26) and the ninth resistor (R29, R39) being simultaneously connected to a primary side circuit of the direct current conversion circuit (200) and to a current sensing pin of the control circuit (500), the power supply mode setting sub-circuit (402) connected to the switch sub-circuit (401) and configured to generate different voltage drops according to the switch signals generated by the switch sub-circuit (401),
wherein the control circuit (500) is specifically configured to detect the voltage drop generated by the power supply mode setting sub-circuit (402), determine, according to the detected voltage drop, the first power supply mode or the second power supply mode that the direct current conversion circuit (200) is to be in, and send a first frequency adjustment instruction or a second frequency adjustment instruction to the direct current conversion circuit (200), so that the direct current conversion circuit enters the first power supply mode or the second power supply mode and performs direct current conversion working in the first power supply mode or the second power supply mode to output the first drive current or the second drive current; wherein
the current output port (800) comprises a positive output terminal (LED+), a first negative output terminal (LED-1), and a second negative output terminal (LED-2);
the switch sub-circuit (401) is specifically configured to be switched on, as a first alternative, or cut off, as a second alternative, when it is detected that a positive input end and a negative input end of the load (700) are respectively connected to the positive output terminal (LED+) and the first negative output terminal (LED-1) of the current output port (800), or to be cut off, for the first alternative, or switched on, for the second alternative, when it is detected that the positive input end and the negative input end of the load (700) are respectively connected to the positive output terminal (LED+) and the second negative output terminal (LED-2) of the current output port (800);
the power supply mode setting sub-circuit (402) is specifically configured to generate a first voltage drop, asthe first power supply mode setting signal, when the switch sub-circuit (401) is switched on, wherein a current of the direct current conversion circuit (200) flows through the eighth resistor (R26) and the ninth resistor (R29, R39), or to generate a second voltage drop, as the second power supply mode setting signal, when the switch sub-circuit (401) is cut off, wherein the current flows through the ninth resistor (R29, R39) only; and
the control circuit (500) is specifically configured to send, when the first voltage drop is detected, the first frequency adjustment instruction to the direct current conversion circuit (200), or send, when the second voltage drop is detected, the second frequency adjustment instruction to the direct current conversion circuit (200) .

2. The power supply apparatus according to claim 1, **characterized in that**
the power supply apparatus further comprises a filter circuit (300) connected between the direct current conversion circuit (200) and the power supply mode selection circuit (400, 401, 402) and performing filtering processing on the first drive current or the second drive current output by the direct current conversion circuit (200) .

3. The power supply apparatus according to claim 1, **characterized in that**
the switch sub-circuit (401) comprises a first diode (D63), a first resistor (R66), a second resistor (R68), a third resistor (R72), a fourth resistor (R63), a fifth resistor (R64), a sixth resistor (R67), a first triode (Q61), and a first optical coupler (U21);
the power supply mode setting sub-circuit (402) comprises a first MOS transistor (M22), the eighth resistor (R26) and the ninth resistor (R29, R39) connected in parallel, a tenth resistor (R32), an eleventh resistor (R33), and a first capacitor (C27) connected in parallel at two ends of the eleventh resistor (R33);
one end of the first resistor (R66) is connected to the positive output terminal (LED+), the other end of the first resistor (R66) is connected between a positive electrode of the first diode (D63) and the second negative output terminal (LED-2), a negative electrode of the first diode (D63) and the first negative output terminal (LED-1) are grounded simultaneously, and the first resistor (R66) is an alternative resistor;
a base of the first triode (Q61) is connected between the second resistor (R68) and the third resistor (R72), an emitter of the first triode (Q61) and the other end of the third resistor (R72) are grounded simultaneously, the other end of the second resistor (R68) is connected between the first diode (D63) and the second negative output terminal (LED-2), a collector of the first triode (Q61) is connected to a cathode of an input end of the first optical coupler (U21), an emitter of a first output end of the first optical coupler (U21) is grounded, a collector of a second output end of the first optical coupler (U21) is connected between a gate of the first MOS transistor (M22) and the first capacitor (C27), the other end of the first capacitor (C27) is grounded, a source of the first MOS transistor (M22) and one end of the ninth resistor (R29, R39) are grounded simultaneously, a drain of the first MOS transistor (M22) is connected to one end of the eighth resistor (R26), the other ends of the eighth resistor (R26) and the ninth resistor (R29, R39) are connected to the direct current conversion circuit (200) and the control circuit (500) simultaneously, one end of the tenth resistor (R32) is connected to a VCC pin of the control circuit (500), the other end of the tenth resistor (R32) is connected to one end of the eleventh resistor (R33), and the other end of the eleventh resistor (R33) is grounded; and
one end of the sixth resistor (R67) is connected to an anode of the input end of the first optical coupler (U21), the other end of the sixth resistor (R67) is connected between the fourth resistor (R63) and the fifth resistor (R64), the other end of the fourth resistor (R63) is connected to the positive output terminal (LED+), and the other end of the fifth resistor (R64) is grounded.

4. The power supply apparatus according to claim 1, **characterized in that**
the power supply apparatus can further comprise a secondary side power supply circuit (600) connected to the power supply mode selection circuit (400, 401, 402).

5. The power supply apparatus according to claim 4, **characterized in that**
the secondary side power supply circuit (600) comprises a voltage stabilizing diode (ZD1) and a second capacitor (C65) connected in parallel at two ends of the voltage stabilizing diode (ZD1);
the switch sub-circuit (401) comprises a first resistor (R66), a second resistor (R68), a third resistor (R72), a fourth resistor (R63), a sixth resistor (R67), a twelfth resistor (R73), a thirteenth resistor (R74) and a fourteenth resistor (R75), a first triode (Q61), a second triode (Q62), a first optical coupler (U21), and a second MOS transistor (M61);
the power supply mode setting sub-circuit (402) comprises a first MOS transistor (M22), the eighth resistor (R26) and the ninth resistor (R29, R39) connected in parallel, a tenth resistor (R32), an eleventh resistor (R33), and a first capacitor (C27) connected in parallel at two ends of the eleventh resistor (R33);
one end of the first resistor (R66) is connected to a positive output terminal (LED+), the other end of the first resistor (R66) is connected between a drain of the second MOS transistor (M61) and a second negative output terminal (LED-2), and a source of the second MOS transistor (M61) and a first negative output terminal (LED-1) are grounded simultaneously;
a base of the first triode (Q61) is connected among the second resistor (R68), the third resistor (R72), and the fourteenth resistor (R75), an emitter of the first triode (Q61) and the other end of the third resistor (R72) are grounded simultaneously, the other end of the second resistor (R68) is connected between the drain of the second MOS transistor (M61) and the second negative output terminal (LED-2), a collector of the first triode (Q61) is connected to a cathode of an input end of the first optical coupler (U21) and one end of the twelfth resistor (R73), a base of the second triode (Q62) is connected between the twelfth resistor (R73) and the thirteenth resistor (R74), an emitter of the second triode (Q62) is connected to the other end of the thirteenth resistor (R74) and one end of the second capacitor (C65) simultaneously, the other end of the second capacitor (C65) is grounded, a collector of the second triode (Q62) is connected to a gate of the second MOS transistor (M61) and one end of the fourteenth resistor (R75) simultaneously, and the other end of the fourteenth resistor (R75) is connected among the base of the first triode (Q61), the second resistor (R68) and the third resistor (R72);
one end of the fourth resistor (R63) is connected to the positive output terminal (LED+), the other end of the fourth resistor (R63) is connected to a negative electrode of the voltage stabilizing diode (ZD1) and one end of the sixth resistor (R67) simultaneously, a positive electrode of the voltage stabilizing diode (ZD1) is grounded, and the other end of the sixth resistor (R67) is connected to an anode of the input end of the first optical coupler (U21); and
an emitter of a first output end of the first optical coupler (U21) is grounded, a collector of a second output end of the first optical coupler (U21) is connected between a gate of the first MOS transistor (M22) and the first capacitor (C27), the other end of the first capacitor (C27) is grounded, a source of the first MOS transistor (M22) and one end of the ninth resistor (R29, R39) are both grounded, a drain of the first MOS transistor (M22) is connected to one end of the eighth resistor (R26), the other ends of the eighth resistor (R26) and the ninth resistor (R29, R39) are simultaneously connected to the direct current conversion circuit (200) and the control circuit (500), one end of the tenth resistor (R32) is connected to a VCC pin of the control circuit (500), the other end of the tenth resistor (R32) is connected to one end of the eleventh resistor (R33), and the other end of the eleventh resistor (R33) is grounded.

6. A method of operating the power supply apparatus of any of claims 1 to 5, wherein the method comprises the following steps:
S1: detecting the connection manner between the load (700) and the current output port (800), and generating the first power supply mode setting signal or the second power supply mode setting signal according to the detected connection manner; and
S2: controlling, according to the first power supply mode setting signal, the direct current conversion circuit (200) so that same enters the first power supply mode and performs direct current conversion according to the first working frequency to output the first drive current corresponding to the first working frequency to the load (700); or
controlling, according to the second power supply mode setting signal, the direct current conversion circuit (200) so that same enters the second power supply mode and performs direct current conversion according to the second working frequency to output the second drive current corresponding to the second working frequency to the load (700) ;
wherein step S1 specifically comprises:
enabling the switch sub-circuit (401) to be switched on or cut off according to the connection manner between the load (700) and the current output port (800); if the switch sub-circuit (401) is switched on, the power supply mode setting sub-circuit (402) generating the first voltage drop; and if the switch sub-circuit (401) is cut off, the power supply mode setting sub-circuit (402) generating the second voltage drop; and
wherein step S2 specifically comprises:
detecting the voltage drop generated by the power supply mode setting sub-circuit (402); if the first voltage drop is detected, sending the first frequency adjustment instruction to the direct current conversion circuit (200) so that the direct current conversion circuit (200) enters the first power supply mode and performs direct current conversion according to the first working frequency to output the first drive current corresponding to the first working frequency to the load (700); and if the second voltage drop is detected, sending the second frequency adjustment instruction to the direct current conversion circuit (200) so that the direct current conversion circuit (200) enters the second power supply mode and performs direct current conversion according to the second working frequency to output the second drive current corresponding to the second working frequency to the load (700).

## Patentansprüche

1. Leistungsversorgungsvorrichtung, umfassend:
eine Leistungsquelle (100),
einen Stromausgabeanschluss (800),
eine Gleichstromumwandlungsschaltung (200) und
eine Leistungsversorgungsmodusauswahlschaltung (400, 401, 402) und
eine Steuerschaltung (500), die zwischen der Leistungsversorgungsmodusauswahlschaltung (400, 401, 402) und der Gleichstromumwandlungsschaltung (200) verbunden ist,
wobei die Leistungsversorgungsmodusauswahlschaltung (400, 401, 402) konfiguriert ist, um ein erstes Leistungsversorgungsmoduseinstellsignal oder ein zweites Leistungsversorgungsmoduseinstellsignal gemäß einer Verbindungsart zwischen einer Last (700) und dem Stromausgabeanschluss (800) zu erzeugen;
wobei die Steuerschaltung (500) konfiguriert ist, um, wenn das erste Leistungsversorgungsmoduseinstellsignal empfangen wird, ein erstes Steuersignal an die Gleichstromumwandlungsschaltung (200) zu senden, sodass die Gleichstromumwandlungsschaltung (200) in einen ersten Leistungsversorgungsmodus eintritt und eine Gleichstromumwandlung gemäß einer ersten Arbeitsfrequenz durchführt, um einen ersten Treiberstrom, der der ersten Arbeitsfrequenz entspricht, an die Last (700) abzugeben;
wobei die Steuerschaltung (500) ferner konfiguriert ist, um, wenn das zweite Leistungsversorgungsmoduseinstellsignal empfangen wird, ein zweites Steuersignal an die Gleichstromumwandlungsschaltung (200) zu senden, sodass die Gleichstromumwandlungsschaltung (200) in einen zweiten Leistungsversorgungsmodus eintritt und eine Gleichstromumwandlung gemäß einer zweiten Arbeitsfrequenz durchführt, um einen zweiten Treiberstrom, der der zweiten Arbeitsfrequenz entspricht, an die Last (700) abzugeben,
wobei die Leistungsversorgungsmodusauswahlschaltung (400, 401, 402) ferner umfasst:
eine Schalterteilschaltung (401), die mit dem Stromausgabeanschluss (800) verbunden und konfiguriert ist, um unterschiedliche Schaltsignale gemäß unterschiedlichen Verbindungsarten zwischen der Last (700) und dem Stromausgabeanschluss (800) zu erzeugen; und
eine Leistungsversorgungsmoduseinstellteilschaltung (402), umfassend einen achten Widerstand (R26) und einen neunten Widerstand (R29, R39), die parallel verbunden sind, wobei der achte Widerstand (R26) und der neunte Widerstand (R29, R39) gleichzeitig mit einer primärseitigen Schaltung der Gleichstromumwandlungsschaltung (200) und mit einem Stromerkennungsstift der Steuerschaltung (500) verbunden sind, wobei die Leistungsversorgungsmoduseinstellteilschaltung (402) mit der Schalterteilschaltung (401) verbunden und konfiguriert ist, um unterschiedliche Spannungsabfälle gemäß den Schaltersignalen zu erzeugen, die durch die Schalterteilschaltung (401) erzeugt werden,
wobei die Steuerschaltung (500) speziell konfiguriert ist, um den Spannungsabfall zu erkennen, der durch die Leistungsversorgungsmoduseinstellteilschaltung (402) erzeugt wird, gemäß dem erkannten Spannungsabfall, den ersten Leistungsversorgungsmodus oder den zweiten Leistungsversorgungsmodus zu bestimmen, in dem die Gleichstromumwandlungsschaltung (200) sein soll, und eine erste Frequenzanpassungsanweisung oder eine zweite Frequenzanpassungsanweisung an die Gleichstromumwandlungsschaltung (200) zu senden, sodass die Gleichstromumwandlungsschaltung in den ersten Leistungsversorgungsmodus oder den zweiten Leistungsversorgungsmodus eintritt und eine Gleichstromumwandlung durchführt, die in dem ersten Leistungsversorgungsmodus oder dem zweiten Leistungsversorgungsmodus arbeitet, um den ersten Treiberstrom oder den zweiten Treiberstrom abzugeben; wobei
der Stromausgabeanschluss (800) einen positiven Ausgabeanschluss (LED+), einen ersten negativen Ausgabeanschluss (LED-1) und einen zweiten negativen Ausgabeanschluss (LED-2) umfasst;
die Schalterteilschaltung (401) speziell konfiguriert ist, um als eine erste Alternative eingeschaltet zu werden, oder als eine zweite Alternative getrennt zu werden, wenn erkannt wird, dass ein positives Eingabeende und ein negatives Eingabeende der Last (700) jeweils mit dem positiven Ausgabeanschluss (LED+) und dem ersten negativen Ausgabeanschluss (LED-1) des Stromausgabeanschlusses (800) verbunden sind, oder getrennt zu werden, für die erste Alternative, oder eingeschaltet zu werden, für die zweite Alternative, wenn erkannt wird, dass das positive Eingabeende und das negative Eingabeende der Last (700) jeweils mit dem positiven Ausgabeanschluss (LED+) und dem zweiten negativen Ausgabeanschluss (LED-2) des Stromausgabeanschlusses (800) verbunden sind;
die Leistungsversorgungsmoduseinstellteilschaltung (402) speziell konfiguriert ist, um einen ersten Spannungsabfall, als das erste Leistungsversorgungsmoduseinstellsignal, zu erzeugen, wenn die Schalterteilschaltung (401) eingeschaltet ist, wobei ein Strom der Gleichstromumwandlungsschaltung (200) durch den achten Widerstand (R26) und den neunten Widerstand (R29, R39) fließt, oder um einen zweiten Spannungsabfall, als das zweite Leistungsversorgungsmoduseinstellsignal, zu erzeugen, wenn die Schalterteilschaltung (401) getrennt ist, wobei der Strom nur durch den neunten Widerstand (R29, R39) fließt; und
die Steuerschaltung (500) speziell konfiguriert ist, um, wenn der erste Spannungsabfall erkannt wird, die erste Frequenzanpassungsanweisung an die Gleichstromumwandlungsschaltung (200) zu senden oder, wenn der zweite Spannungsabfall erkannt wird, die zweite Frequenzanpassungsanweisung an die Gleichstromumwandlungsschaltung (200) zu senden.

2. Leistungsversorgungsvorrichtung nach Anspruch 1,
**dadurch gekennzeichnet, dass**
die Leistungsversorgungsvorrichtung ferner eine Filterschaltung (300) umfasst, die zwischen der Gleichstromumwandlungsschaltung (200) und der Leistungsversorgungsmodusauswahlschaltung (400, 401, 402) verbunden ist und eine Filterverarbeitung an dem ersten Treiberstrom oder dem zweiten Treiberstrom durchführt, die durch die Gleichstromumwandlungsschaltung (200) ausgegeben werden.

3. Leistungsversorgungsvorrichtung nach Anspruch 1,
**dadurch gekennzeichnet, dass**
die Schalterteilschaltung (401) eine erste Diode (D63), einen ersten Widerstand (R66), einen zweiten Widerstand (R68), einen dritten Widerstand (R72), einen vierten Widerstand (R63), einen fünften Widerstand (R64), einen sechsten Widerstand (R67), eine erste Triode (Q61) und einen ersten optischen Koppler (U21) umfasst;
die Leistungsversorgungsmoduseinstellteilschaltung (402) einen ersten MOS-Transistor (M22), den achten Widerstand (R26) und den neunten Widerstand (R29, R39), die parallel verbunden sind, einen zehnten Widerstand (R32), einen elften Widerstand (R33) und einen ersten Kondensator (C27) umfasst, der an zwei Enden des elften Widerstands (R33) parallel verbunden ist;
ein Ende des ersten Widerstands (R66) mit dem positiven Ausgabeanschluss (LED+) verbunden ist, das andere Ende des ersten Widerstands (R66) zwischen einer positiven Elektrode der ersten Diode (D63) und dem zweiten negativen Ausgabeanschluss (LED-2) verbunden ist, eine negative Elektrode der ersten Diode (D63) und der erste negative Ausgabeanschluss (LED-1) gleichzeitig geerdet sind und der erste Widerstand (R66) ein alternativer Widerstand ist;
eine Basis der ersten Triode (Q61) zwischen dem zweiten Widerstand (R68) und dem dritten Widerstand (R72) verbunden ist, ein Emitter der ersten Triode (Q61) und das andere Ende des dritten Widerstands (R72) gleichzeitig geerdet sind, das andere Ende des zweiten Widerstands (R68) zwischen der ersten Diode (D63) und dem zweiten negativen Ausgabeanschluss (LED-2) verbunden ist, ein Kollektor des ersten Triode (Q61) mit einer Kathode eines Eingabeendes des ersten optischen Kopplers (U21) verbunden ist, ein Emitter eines ersten Ausgabeendes des ersten optischen Kopplers (U21) geerdet ist, ein Kollektor eines zweiten Ausgabeendes des ersten optischen Kopplers (U21) zwischen einem Gate des ersten MOS-Transistors (M22) und dem ersten Kondensator (C27) verbunden ist, das andere Ende des ersten Kondensators (C27) geerdet ist, eine Quelle des ersten MOS-Transistors (M22) und ein Ende des neunten Widerstands (R29, R39) gleichzeitig geerdet sind, der Drain des ersten MOS-Transistors (M22) mit einem Ende des achten Widerstands (R26) verbunden ist, die anderen Enden des achten Widerstands (R26) und des neunten Widerstands (R29, R39) mit der Gleichstromumwandlungsschaltung (200) und der Steuerschaltung (500) gleichzeitig verbunden sind, ein Ende des zehnten Widerstands (R32) mit einem VCC-Pin der Steuerschaltung (500) verbunden ist, das andere Ende des zehnten Widerstands (R32) mit einem Ende des elften Widerstands (R33) verbunden ist und das andere Ende des elften Widerstands (R33) geerdet ist; und
ein Ende des sechsten Widerstands (R67) mit einer Anode des Eingabeendes des ersten optischen Kopplers (U21) verbunden ist, das andere Ende des sechsten Widerstands (R67) zwischen dem vierten Widerstand (R63) und dem fünften Widerstand (R64) verbunden ist, das andere Ende des vierten Widerstands (R63) mit dem positiven Ausgabeanschluss (LED+) verbunden ist und das andere Ende des fünften Widerstands (R64) geerdet ist.

4. Leistungsversorgungsvorrichtung nach Anspruch 1,
**dadurch gekennzeichnet, dass**
die Leistungsversorgungsvorrichtung ferner eine sekundärseitige Leistungsversorgungsschaltung (600) umfassen kann, die mit der Leistungsversorgungsmodusauswahlschaltung (400, 401, 402) verbunden ist.

5. Leistungsversorgungsvorrichtung nach Anspruch 4,
**dadurch gekennzeichnet, dass**
die sekundärseitige Leistungsversorgungsschaltung (600) eine Spannungsstabilisierungsdiode (ZD1) und einen zweiten Kondensator (C65) umfasst, der an zwei Enden der Spannungsstabilisierungsdiode (ZD1) parallel verbunden ist;
die Schalterteilschaltung (401) einen ersten Widerstand (R66), einen zweiten Widerstand (R68), einen dritten Widerstand (R72), einen vierten Widerstand (R63), einen sechsten Widerstand (R67), einen zwölften Widerstand (R73), einen dreizehnten Widerstand (R74) und einen vierzehnten Widerstand (R75), eine erste Triode (Q61), eine zweite Triode (Q62), einen ersten optischen Koppler (U21) und einen zweiten MOS-Transistor (M61) umfasst;
die Leistungsversorgungsmoduseinstellteilschaltung (402) einen ersten MOS-Transistor (M22), den achten Widerstand (R26) und den neunten Widerstand (R29, R39), die parallel verbunden sind, einen zehnten Widerstand (R32), einen elften Widerstand (R33) und einen ersten Kondensator (C27) umfasst, der an zwei Enden des elften Widerstands (R33) parallel verbunden ist;
ein Ende des ersten Widerstands (R66) mit einem positiven Ausgabeanschluss (LED+) verbunden ist, das andere Ende des ersten Widerstands (R66) zwischen einem Drain des zweiten MOS-Transistors (M61) und einem zweiten negativen Ausgabeanschluss (LED-2) verbunden ist und eine Quelle des zweiten MOS-Transistors (M61) und ein erster negativer Ausgabeanschluss (LED-1) gleichzeitig geerdet sind;
eine Basis der ersten Triode (Q61) unter dem zweiten Widerstand (R68), dem dritten Widerstand (R72) und dem vierzehnten Widerstand (R75) verbunden ist, ein Emitter der ersten Triode (Q61) und das andere Ende des dritten Widerstands (R72) gleichzeitig geerdet sind, das andere Ende des zweiten Widerstands (R68) zwischen dem Drain des zweiten MOS-Transistors (M61) und dem zweiten negativen Ausgabeanschluss (LED-2) verbunden ist, ein Kollektor der ersten Triode (Q61) mit einer Kathode eines Eingabeendes des ersten optischen Kopplers (U21) und einem Ende des zwölften Widerstands (R73) verbunden ist, eine Basis des zweiten Triode (Q62) zwischen dem zwölften Widerstand (R73) und dem dreizehnten Widerstand (R74) verbunden ist, ein Emitter der zweiten Triode (Q62) mit dem anderen Ende des dreizehnten Widerstands (R74) und einem Ende des zweiten Kondensators (C65) gleichzeitig verbunden ist, das andere Ende des zweiten Kondensators (C65) geerdet ist, ein Kollektor der zweiten Triode (Q62) mit einem Gate des zweiten MOS-Transistors (M61) und einem Ende des vierzehnten Widerstands (R75) gleichzeitig verbunden ist und das andere Ende des vierzehnten Widerstands (R75) unter der Basis der ersten Triode (Q61), des zweiten Widerstands (R68) und des dritten Widerstands (R72) verbunden ist;
ein Ende des vierten Widerstands (R63) mit dem positiven Ausgabeanschluss (LED+) verbunden ist, das andere Ende des vierten Widerstands (R63) mit einer negativen Elektrode der Spannungsstabilisierungsdiode (ZD1) und einem Ende des sechsten Widerstands (R67) gleichzeitig verbunden ist, eine positive Elektrode der Spannungsstabilisierungsdiode (ZD1) geerdet ist und das andere Ende des sechsten Widerstands (R67) mit einer Anode des Eingabeendes des ersten optischen Kopplers (U21) verbunden ist; und
ein Emitter eines ersten Ausgabeendes des ersten optischen Kopplers (U21) geerdet ist, ein Kollektor eines zweiten Ausgabeendes des ersten optischen Kopplers (U21) zwischen einem Gate des ersten MOS-Transistors (M22) und dem ersten Kondensator (C27) verbunden ist, das andere Ende des ersten Kondensators (C27) geerdet ist, eine Quelle des ersten MOS-Transistors (M22) und ein Ende des neunten Widerstands (R29, R39) beide geerdet sind, ein Drain des ersten MOS-Transistors (M22) mit einem Ende des achten Widerstands (R26) verbunden ist, die anderen Enden des achten Widerstands (R26) und des neunten Widerstands (R29, R39) gleichzeitig mit der Gleichstromumwandlungsschaltung (200) und der Steuerschaltung (500) verbunden sind, ein Ende des zehnten Widerstands (R32) mit einem VCC-Pin der Steuereinheit (500) verbunden ist, das andere Ende des zehnten Widerstands (R32) mit dem einen Ende des elften Widerstands (R33) verbunden ist und das andere Ende des elften Widerstands (R33) geerdet ist.

6. Verfahren zum Betreiben der Leistungsversorgungsvorrichtung nach einem der Ansprüche 1 bis 5, wobei das Verfahren die folgenden Schritte umfasst:
S1 : Erkennen der Verbindungsart zwischen der Last (700) und dem Stromausgabeanschluss (800) und Erzeugen des ersten Leistungsversorgungsmoduseinstellsignals oder des zweiten Leistungsversorgungsmoduseinstellsignals gemäß der erkannten Verbindungsart; und
S2 : Steuern, gemäß dem ersten Leistungsversorgungsmoduseinstellsignal, der Gleichstromumwandlungsschaltung (200), sodass diese in den ersten Leistungsversorgungsmodus eintritt und eine Gleichstromumwandlung gemäß der ersten Arbeitsfrequenz durchführt, um den ersten Treiberstrom, der der ersten Arbeitsfrequenz entspricht, an die Last (700) abzugeben; oder
Steuern, gemäß dem zweiten Leistungsversorgungsmoduseinstellsignal, der Gleichstromumwandlungsschaltung (200), sodass diese in den zweiten Leistungsversorgungsmodus eintritt und eine Gleichstromumwandlung gemäß der zweiten Arbeitsfrequenz durchführt, um den zweiten Treiberstrom, der der zweiten Arbeitsfrequenz entspricht, an die Last abzugeben (700);
wobei Schritt S1 speziell Folgendes umfasst:
Ermöglichen, dass die Schalterteilschaltung (401) gemäß der Verbindungsart zwischen der Last (700) und dem Stromausgabeanschluss (800) eingeschaltet oder getrennt werden kann; falls die Schalterteilschaltung (401) eingeschaltet ist, die Leistungsversorgungsmoduseinstellteilschaltung (402) den ersten Spannungsabfall erzeugt; und falls die Schalterteilschaltung (401) getrennt ist, die Leistungsversorgungsmoduseinstellteilschaltung (402) den zweiten Spannungsabfall erzeugt; und
wobei Schritt S2 spezifisch umfasst:
Erkennen des Spannungsabfalls, der durch die Leistungsversorgungsmoduseinstellteilschaltung (402) erzeugt wird; falls der erste Spannungsabfall erkannt wird, Senden der ersten Frequenzanpassungsanweisung an die Gleichstromumwandlungsschaltung (200), sodass die Gleichstromumwandlungsschaltung (200) in den ersten Leistungsversorgungsmodus eintritt und eine Gleichstromumwandlung gemäß der ersten Arbeitsfrequenz durchführt, um den ersten Treiberstrom, der der ersten Arbeitsfrequenz entspricht, an die Last (700) abzugeben; und falls der zweite Spannungsabfall erkannt wird, Senden der zweiten Frequenzanpassungsanweisung an die Gleichstromumwandlungsschaltung (200), sodass die Gleichstromumwandlungsschaltung (200) in den zweiten Leistungsversorgungsmodus eintritt und eine Gleichstromumwandlung gemäß der zweiten Arbeitsfrequenz durchführt, um den zweiten Treiberstrom, der der zweiten Arbeitsfrequenz entspricht, an die Last (700) abzugeben.

## Revendications

1. Appareil d'alimentation en puissance, comprenant :
une source de puissance (100),
un port de sortie de courant (800),
un circuit de conversion de courant continu (200), et
un circuit de sélection de mode d'alimentation en puissance (400, 401, 402), et
un circuit de commande (500) connecté entre le circuit de sélection de mode d'alimentation en puissance (400, 401, 402) et le circuit de conversion de courant continu (200),
dans lequel le circuit de sélection de mode d'alimentation en puissance (400, 401, 402) est configuré pour générer un premier signal de réglage de mode d'alimentation en puissance ou un second signal de réglage de mode d'alimentation en puissance selon une manière de connexion entre une charge (700) et le port de sortie de courant (800) ;
dans lequel le circuit de commande (500) est configuré pour envoyer, lorsque le premier signal de réglage de mode d'alimentation en puissance est reçu, un premier signal de commande au circuit de conversion de courant continu (200), de sorte que le circuit de conversion de courant continu (200) entre dans un premier mode d'alimentation en puissance et met en oeuvre une conversion de courant continu selon une première fréquence de travail pour délivrer en sortie un premier courant de pilotage correspondant à la première fréquence de travail à la charge (700) ;
dans lequel le circuit de commande (500) est en outre configuré pour envoyer, lorsque le second signal de réglage de mode d'alimentation en puissance est reçu, un second signal de commande au circuit de conversion de courant continu (200), de sorte que le circuit de conversion de courant continu (200) entre dans un second mode d'alimentation en puissance et met en oeuvre une conversion de courant continu selon une seconde fréquence de travail pour délivrer en sortie un second courant de pilotage correspondant à la seconde fréquence de travail à la charge (700),
dans lequel le circuit de sélection de mode d'alimentation en puissance (400, 401, 402) comprend en outre :
un sous-circuit de commutation (401) connecté au port de sortie de courant (800) et configuré pour générer différents signaux de commutation selon différentes manières de connexion entre la charge (700) et le port de sortie de courant (800) ; et
un sous-circuit de réglage de mode d'alimentation en puissance (402) comprenant une huitième résistance (R26) et une neuvième résistance (R29, R39) qui sont connectées en parallèle, la huitième résistance (R26) et la neuvième résistance (R29, R39) étant simultanément connectées à un circuit côté primaire du circuit de conversion de courant continu (200) et à une broche de captage de courant du circuit de commande (500), le sous-circuit de réglage de mode d'alimentation en puissance (402) étant connecté au sous-circuit de commutation (401) et configuré pour générer différentes chutes de tension selon les signaux de commutation générés par le sous-circuit de commutation (401),
dans lequel le circuit de commande (500) est spécifiquement configuré pour détecter la chute de tension générée par le sous-circuit de réglage de mode d'alimentation en puissance (402), déterminer, selon la chute de tension détectée, le premier mode d'alimentation en puissance ou le second mode d'alimentation en puissance dans lequel le circuit de conversion de courant continu (200) doit se trouver, et envoyer une première instruction d'ajustement de fréquence ou une seconde instruction d'ajustement de fréquence au circuit de conversion de courant continu (200), de sorte que le circuit de conversion de courant continu entre dans le premier mode d'alimentation en puissance ou le second mode d'alimentation en puissance et met en oeuvre un travail de conversion de courant continu dans le premier mode d'alimentation en puissance ou le second mode d'alimentation en puissance pour délivrer en sortie le premier courant de pilotage ou le second courant de pilotage ; dans lequel
le port de sortie de courant (800) comprend une borne de sortie positive (LED+), une première borne de sortie négative (LED-1) et une seconde borne de sortie négative (LED-2) ;
le sous-circuit de commutation (401) est spécifiquement configuré pour être activé, en guise de première alternative, ou coupé, en guise de seconde alternative, lorsqu'il est détecté qu'une extrémité d'entrée positive et une extrémité d'entrée négative de la charge (700) sont respectivement connectées à la borne de sortie positive (LED+) et à la première borne de sortie négative (LED-1) du port de sortie de courant (800), ou pour être coupé, pour la première alternative, ou activé, pour la seconde alternative, lorsqu'il est détecté que l'extrémité d'entrée positive et l'extrémité d'entrée négative de la charge (700) sont respectivement connectées à la borne de sortie positive (LED+) et à la seconde borne de sortie négative (LED-2) du port de sortie de courant (800) ;
le sous-circuit de réglage de mode d'alimentation en puissance (402) est spécifiquement configuré pour générer une première chute de tension, en guise de premier signal de réglage de mode d'alimentation en puissance, lorsque le sous-circuit de commutation (401) est activé, dans lequel un courant du circuit de conversion de courant continu (200) circule à travers la huitième résistance (R26) et la neuvième résistance (R29, R39), ou pour générer une seconde chute de tension, en guise de second signal de réglage de mode d'alimentation en puissance, lorsque le sous-circuit de commutation (401) est coupé, dans lequel le courant circule à travers la neuvième résistance (R29, R39) uniquement ; et
le circuit de commande (500) est spécifiquement configuré pour envoyer, lorsque la première chute de tension est détectée, la première instruction d'ajustement de fréquence au circuit de conversion de courant continu (200), ou envoyer, lorsque la seconde chute de tension est détectée, la seconde instruction d'ajustement de fréquence au circuit de conversion de courant continu (200).

2. Appareil d'alimentation en puissance selon la revendication 1,
**caractérisé en ce que**
l'appareil d'alimentation en puissance comprend en outre un circuit de filtre (300) connecté entre le circuit de conversion de courant continu (200) et le circuit de sélection de mode d'alimentation en puissance (400, 401, 402) et met en oeuvre un traitement de filtrage sur le premier courant de pilotage ou le second courant de pilotage délivré en sortie par le circuit de conversion de courant continu (200).

3. Appareil d'alimentation en puissance selon la revendication 1,
**caractérisé en ce que**
le sous-circuit de commutation (401) comprend une première diode (D63), une première résistance (R66), une deuxième résistance (R68), une troisième résistance (R72), une quatrième résistance (R63), une cinquième résistance (R64), une sixième résistance (R67), une première triode (Q61) et un premier coupleur optique (U21) ;
le sous-circuit de réglage de mode d'alimentation en puissance (402) comprend un premier transistor MOS (M22), la huitième résistance (R26) et la neuvième résistance (R29, R39) connectées en parallèle, une dixième résistance (R32), une onzième résistance (R33), et un premier condensateur (C27) connecté en parallèle au niveau de deux extrémités de la onzième résistance (R33) ;
une extrémité de la première résistance (R66) est connectée à la borne de sortie positive (LED+), l'autre extrémité de la première résistance (R66) est connectée entre une électrode positive de la première diode (D63) et la seconde borne de sortie négative (LED-2), une électrode négative de la première diode (D63) et la première borne de sortie négative (LED-1) sont reliées à la terre simultanément, et la première résistance (R66) est une résistance alternative ;
une base de la première triode (Q61) est connectée entre la deuxième résistance (R68) et la troisième résistance (R72), un émetteur de la première triode (Q61) et l'autre extrémité de la troisième résistance (R72) sont reliés à la terre simultanément, l'autre extrémité de la deuxième résistance (R68) est connectée entre la première diode (D63) et la seconde borne de sortie négative (LED-2), un collecteur de la première triode (Q61) est connecté à une cathode d'une extrémité d'entrée du premier coupleur optique (U21), un émetteur d'une première extrémité de sortie du premier coupleur optique (U21) est relié à la terre, un collecteur d'une seconde extrémité de sortie du premier coupleur optique (U21) est connecté entre une grille du premier transistor MOS (M22) et le premier condensateur (C27), l'autre extrémité du premier condensateur (C27) est reliée à la terre, une source du premier transistor MOS (M22) et une extrémité de la neuvième résistance (R29, R39) sont reliées à la terre simultanément, un drain du premier transistor MOS (M22) est connecté à une extrémité de la huitième résistance (R26), les autres extrémités de la huitième résistance (R26) et de la neuvième résistance (R29, R39) sont connectées au circuit de conversion de courant continu (200) et au circuit de commande (500) simultanément, une extrémité de la dixième résistance (R32) est connectée à une broche VCC du circuit de commande (500), l'autre extrémité de la dixième résistance (R32) est connectée à une extrémité de la onzième résistance (R33), et l'autre extrémité de la onzième résistance (R33) est reliée à la terre ; et
une extrémité de la sixième résistance (R67) est connectée à une anode de l'extrémité d'entrée du premier coupleur optique (U21), l'autre extrémité de la sixième résistance (R67) est connectée entre la quatrième résistance (R63) et la cinquième résistance (R64), l'autre extrémité de la quatrième résistance (R63) est connectée à la borne de sortie positive (LED+), et l'autre extrémité de la cinquième résistance (R64) est reliée à la terre.

4. Appareil d'alimentation en puissance selon la revendication 1,
**caractérisé en ce que**
l'appareil d'alimentation en puissance peut comprendre en outre un circuit d'alimentation en puissance côté secondaire (600) connecté au circuit de sélection de mode d'alimentation en puissance (400, 401, 402).

5. Appareil d'alimentation en puissance selon la revendication 4,
**caractérisé en ce que**
le circuit d'alimentation en puissance côté secondaire (600) comprend une diode de stabilisation de tension (ZD1) et un second condensateur (C65) connecté en parallèle au niveau de deux extrémités de la diode de stabilisation de tension (ZD1) ;
le sous-circuit de commutation (401) comprend une première résistance (R66), une deuxième résistance (R68), une troisième résistance (R72), une quatrième résistance (R63), une sixième résistance (R67), une douzième résistance (R73), une treizième résistance (R74) et une quatorzième résistance (R75), une première triode (Q61), une seconde triode (Q62), un premier coupleur optique (U21) et un second transistor MOS (M61) ;
le sous-circuit de réglage de mode d'alimentation en puissance (402) comprend un premier transistor MOS (M22), la huitième résistance (R26) et la neuvième résistance (R29, R39) connectées en parallèle, une dixième résistance (R32), une onzième résistance (R33), et un premier condensateur (C27) connecté en parallèle au niveau de deux extrémités de la onzième résistance (R33) ;
une extrémité de la première résistance (R66) est connectée à une borne de sortie positive (LED+), l'autre extrémité de la première résistance (R66) est connectée entre un drain du second transistor MOS (M61) et une seconde borne de sortie négative (LED-2), et une source du second transistor MOS (M61) et une première borne de sortie négative (LED-1) sont reliées à la terre simultanément ;
une base de la première triode (Q61) est connectée parmi la deuxième résistance (R68), la troisième résistance (R72) et la quatorzième résistance (R75), un émetteur de la première triode (Q61) et l'autre extrémité de la troisième résistance (R72) sont reliés à la terre simultanément, l'autre extrémité de la deuxième résistance (R68) est connectée entre le drain du second transistor MOS (M61) et la seconde borne de sortie négative (LED-2), un collecteur de la première triode (Q61) est connecté à une cathode d'une extrémité d'entrée du premier coupleur optique (U21) et une extrémité de la douzième résistance (R73), une base de la seconde triode (Q62) est connectée entre la douzième résistance (R73) et la treizième résistance (R74), un émetteur de la seconde triode (Q62) est connecté à l'autre extrémité de la treizième résistance (R74) et à une extrémité du second condensateur (C65) simultanément, l'autre extrémité du second condensateur (C65) est reliée à la terre, un collecteur de la seconde triode (Q62) est connecté à une grille du second transistor MOS (M61) et à une extrémité de la quatorzième résistance (R75) simultanément, et l'autre extrémité de la quatorzième résistance (R75) est connectée parmi la base de la première triode (Q61), la deuxième résistance (R68) et la troisième résistance (R72) ;
une extrémité de la quatrième résistance (R63) est connectée à la borne de sortie positive (LED+), l'autre extrémité de la quatrième résistance (R63) est connectée à une électrode négative de la diode de stabilisation de tension (ZD1) et à une extrémité de la sixième résistance (R67) simultanément, une électrode positive de la diode de stabilisation de tension (ZD1) est reliée à la terre, et l'autre extrémité de la sixième résistance (R67) est connectée à une anode de l'extrémité d'entrée du premier coupleur optique (U21) ; et
un émetteur d'une première extrémité de sortie du premier coupleur optique (U21) est relié à la terre, un collecteur d'une seconde extrémité de sortie du premier coupleur optique (U21) est connecté entre une grille du premier transistor MOS (M22) et le premier condensateur (C27), l'autre extrémité du premier condensateur (C27) est reliée à la terre, une source du premier transistor MOS (M22) et une extrémité de la neuvième résistance (R29, R39) sont l'une et l'autre reliées à la terre, un drain du premier transistor MOS (M22) est connecté à une extrémité de la huitième résistance (R26), les autres extrémités de la huitième résistance (R26) et de la neuvième résistance (R29, R39) sont simultanément connectées au circuit de conversion de courant continu (200) et au circuit de commande (500), une extrémité de la dixième résistance (R32) est connectée à une broche VCC du circuit de commande (500), l'autre extrémité de la dixième résistance (R32) est connectée à une extrémité de la onzième résistance (R33), et l'autre extrémité de la onzième résistance (R33) est reliée à la terre.

6. Procédé de fonctionnement de l'appareil d'alimentation en puissance selon l'une quelconque des revendications 1 à 5, dans lequel le procédé comprend les étapes suivantes :
S1 : la détection de la manière de connexion entre la charge (700) et le port de sortie de courant (800), et la génération du premier signal de réglage de mode d'alimentation en puissance ou du second signal de réglage de mode d'alimentation en puissance selon la manière de connexion détectée ; et
S2 : la commande, selon le premier signal de réglage de mode d'alimentation en puissance, du circuit de conversion de courant continu (200) de sorte que celui-ci entre dans le premier mode d'alimentation en puissance et met en oeuvre une conversion de courant continu selon la première fréquence de travail pour délivrer en sortie le premier courant de pilotage correspondant à la première fréquence de travail à la charge (700) ; ou
la commande, selon le second signal de réglage de mode d'alimentation en puissance, du circuit de conversion de courant continu (200) de sorte que celui-ci entre dans le second mode d'alimentation en puissance et met en oeuvre une conversion de courant continu selon la seconde fréquence de travail pour délivrer en sortie le second courant de pilotage correspondant à la seconde fréquence de travail à la charge (700) ;
dans lequel l'étape S1 comprend spécifiquement :
le fait de permettre au sous-circuit de commutation (401) d'être activé ou coupé selon la manière de connexion entre la charge (700) et le port de sortie de courant (800) ; si le sous-circuit de commutation (401) est activé, la génération par le sous-circuit de réglage de mode d'alimentation en puissance (402), de la première chute de tension ; et si le sous-circuit de commutation (401) est coupé, la génération par le sous-circuit de réglage de mode d'alimentation en puissance (402), de la seconde chute de tension ; et
dans lequel l'étape S2 comprend spécifiquement :
la détection de la chute de tension générée par le sous-circuit de réglage de mode d'alimentation en puissance (402) ; si la première chute de tension est détectée, l'envoi de la première instruction d'ajustement de fréquence au circuit de conversion de courant continu (200) de sorte que le circuit de conversion de courant continu (200) entre dans le premier mode d'alimentation en puissance et met en oeuvre une conversion de courant continu selon la première fréquence de travail pour délivrer en sortie le premier courant de pilotage correspondant à la première fréquence de travail à la charge (700) ; et si la seconde chute de tension est détectée, l'envoi de la seconde instruction d'ajustement de fréquence au circuit de conversion de courant continu (200) de sorte que le circuit de conversion de courant continu (200) entre dans le second mode d'alimentation en puissance et met en oeuvre une conversion de courant continu selon la seconde fréquence de travail pour délivrer en sortie le second courant de pilotage correspondant à la seconde fréquence de travail à la charge (700).
